# EUROPEAN PATENT APPLICATION

(11) **EP 4 129 126 A1**
(43) Date of publication of application: **08.02.2023**
(21) Application number: 21726223.7
(22) Date of filing: 23.03.2021
(51) Int. Cl.: A47J 31/52, A47J 31/44

(54) **SYSTEMS AND PROCESSES FOR PREPARATION OF EDIBLE PRODUCTS WITH SENSITIVE ACCESS ARRANGEMENTS**

(30) Priority: 24.03.2020 PT 2020116183
(71) Applicant: Novadelta-Comércio e Industria de Cafés, Lda., 1950-041 Lisboa (PT)
(72) Inventor: NABEIRO, Rui Miguel, 7370-112 CAMPO MAIOR (PT)
(74) Representative: Ferreira Pinto, Francisca
(86) International application number: PCT/PT2021/050007
(87) International publication number: WO 2021/194363

(57) **Abstract**

The present invention discloses systems and processes for preparation of edible products, for example aromatic beverages such as espresso coffee and similar, based upon portions (7) of edible substance, for example coffee in a capsule, including an apparatus (1) that comprises a recipient placement disposition (2) adapted for placing a recipient (10, 10') for collecting edible product, an envelope (3) of apparatus and an access disposition (4) that provides selective access to at least one of said recipient placement disposition (2) and an entry passageway (8) of portions, whereby said apparatus (1) is adapted so that can provide selective access to at least one of said recipient placement disposition (2) and entry passageway (8) of portion by means of apprehension of at least one of: a contactless input gesture carried out in the proximal surrounding and a touch gesture carried out on an input surface, preferentially associated with said access disposition (4).

## Description

### Field of the invention

The present invention refers to systems and processes for preparing edible products, in particular including apparatuses for preparing aromatic beverages by means of the extraction of a respective edible substance, said apparatuses including beverage discharge means to the interior of a drinking recipient, in particular a discharge in a direction opposite to the direction of the force of gravity.

### Background of the invention

The prior art presents several solutions of beverage discharge in beverage preparation machines. In particular in the case of aromatic beverages such as for example espresso-type coffee, the beverage discharge is a relevant process with potential impact in the quality of the beverage obtained in the drinking recipient. In fact, in particular in the case of espresso-type coffee, the main characteristics of the discharge flow determine several aspects such as the cream production and retention thereof inside a cup, and the temperature variation as a result of air exposure during the discharge to the cup.

The document DE 2009 048233 A1 discloses a system of the type of the present invention whereby portions of edible substance are provided to a collection space by means of raising a lid-like disposition that comprises the beverage discharge means. This solution presents constructive complexity and ergonomic constrains. Moreover, said lid-like disposition does not provide selective access to the beverage discharge means.

The document WO 2014/086915 A1 discloses a similar system whereby there seems to be an opening for introducing a portion of edible substance, and a beverage discharge provided at a similar height. However, the document does not disclose a compact and ergonomic disposition of said elements.

The document WO 2017/200409 A1 also registered by the author of the present application, discloses a system for preparing aromatic beverages with an enhanced beverage discharge disposition, and also presenting advantageous configurations of the apparatus.

Moreover, systems are generally known whereby the actuation of an access disposition, for example for inserting a capsule containing edible substance, requires a completely free hand for this purpose. It is therefore difficult for a user to operate an apparatus of the type of the present invention if she has both hands substantially occupied. For example, in case that she holds a drinking recipient with one hand and a mobile communication device with the other.

There is therefore the need for solutions that provide better ergonomics of actuation of the access dispositions in this type of apparatuses, in particular selective access to the passageway for introducing portions of edible substance, and to the support of placement of drinking recipient, if that is the case.

### General description of the invention

The objective of the present invention is to provide a system for preparing edible products, for example of the espresso coffee type, based upon portions of edible substance, for example coffee in capsules or pods, in particular including an apparatus and a recipient that can be placed on a recipient placement disposition of said apparatus so that it is operatively associated with a discharge of edible product, said apparatus being adapted so as to provide actuation of at least said access disposition by means of interfaces that do not require application of a force or exerting a pressure upon actuation means of the apparatus, in particular interfaces having different actuation buttons, mechanical dispositions and similar.

This objective is solved according to the present invention by means of a system for preparing edible products according to claims 1.

In particular, the aforementioned objective is solved by means of a system comprising an apparatus that presents an access disposition that provides selective access at least to a recipient placement disposition, in particular so that can selectively cover at least one of: the recipient placement disposition and the product discharge associated therewith, and an entry passageway of portions, based upon the apprehension of an input gesture carried out as a contactless interaction gesture in the proximal surrounding and/or as a haptic interaction gesture with the exterior surface of the apparatus, in particular of said access disposition and/or other input surface associated therewith.

According to another inventive aspect, the apparatus presents input means adapted so that can apprehend and discriminate at least one of, preferentially different type of input gestures, including at least one of: a free hand gesture without touching, a hand gesture holding a recipient without touching, a gesture of placing a recipient upon a respective recipient placement disposition, a gesture of handling a recipient on said recipient placement disposition, a gesture of touch on an input surface, a gesture of placement of a recipient on an input surface of the apparatus.

According to another inventive aspect, the apparatus presents input means adapted so that can apprehend and discriminate different types of objects, in particular different types of portions of edible substance and recipients, in a proximity surrounding and/or placed in respective operation means of the apparatus, preferentially includes the relative position of a mark of these objects with relation to a reference.

Said input means can be adapted so that can apprehend at least one of: an optical interaction, an electromagnetic interaction, including an interaction by infrared, a magnetic interaction and a mechanical force interaction, preferentially smaller or equal to the weight of the interacting object, occurring in at least one of: tri-dimensional input space in the proximal surroundings of the apparatus, and input surface in the exterior envelope of the apparatus.

In the scope of the present invention, the expression "input space", is understood as a spatial envelope that extends externally next to the apparatus and in a distance of up to 0,5 m, preferential up to 0,3 m from the exterior envelope of the apparatus, at least including in the orthogonal projection of at least part of the area defined or confined by input means, or at least in the portion of surrounding space on sight from said input means.

In the scope of the present invention, the expression "input surface" is understood as an exterior surface presenting a plurality of neighbouring points along two directions at least part of which provides apprehension of input by finger touch, without requiring applying pressure, such as for example capacitive devices and similar, and devoid of buttons and similar devices.

The apparatus can present control means adapted so that can control a beverage preparation cycle based upon and according with input data apprehended by said input means in a respective proximal surrounding and associated with an object that is not part of said apparatus, including data relating to the position of said drinking recipient and of said portion of edible substance with relation to parts of said apparatus.

The apparatus can present a recipient placement disposition adapted so that provides support for placement of at least one type of drinking recipient for collection of said edible product, in particular in operative manner so that said so that can be retained on the recipient placement disposition and that the edible product can be discharged along a direction opposite to the one of the gravity force.

The apparatus can present a discharge of edible product associated with said recipient placement discharge and adapted so as to inject said edible product, for example beverage, along the direction contrary to the direction of the gravity force.

The apparatus can present a recipient placement disposition and an entry passageway of portions at least approximately on a same envelope surface of said apparatus that extends along a single plane, preferentially on an envelope surface of the top part of said apparatus. It is preferred when said top part of the apparatus only presents said recipient placement disposition and said entry passageway of portions of edible substance, whereby the access disposition is provided so that can selectively cover both relative to the exterior of the apparatus.

The present invention is further related to a process of operation of a system of the type of the present invention, in particular a process that provides the use of a system without requiring more than two input gestures or of actuation by the user.

This objective is solved according to the present invention by means of a process according to claim 15.

### Description of the Figures

The invention shall be hereinafter explained in greater detail based upon preferred embodiments and the attached Figures.

The Figures show, in simplified schematic representations:
- Figure 1:: side (on the left-hand side) and frontal views of an apparatus (1) for preparing beverages in a system of the type of the present invention, according to prior art;
- Figure 2:: diagram of a drinking recipient (1) operatively placed on a recipient placement disposition (2) operatively associated in fluid connection to an apparatus (3), according to the prior art;
- Figure 3:: frontal and top views (on the right-hand side) of a first embodiment of system according to the present invention, and with the access disposition (4) in closed position (I) ;
- Figure 4:: views according to Figure 3, representing another preferred embodiment of the present invention;
- Figure 5:: views corresponding to those of Figure 3, with the access disposition (4) in an open position (II) in another embodiment of the present invention;
- Figure 6:: views corresponding to those of Figure 3, with the access disposition (4) in a condition of progressing towards the closed position (I);
- Figure 7:: diagram of a first preferred embodiment of process according to the present invention;
- Figure 8:: diagram of a second preferred embodiment of process according to the present invention;
- Figure 9:: side views of a second embodiment of system according to the present invention, and representing two distinct moments of actuation of the access disposition (4) of the apparatus (1);
- Figure 10:: side view according to Figure 9, and representing two other actuation moments of the access disposition (4) of the apparatus (1) ;
- Figure 11:: diagram of a third preferred embodiment of process according to the present invention;
- Figure 12:: diagram of continuation of the preferred embodiment of process according to Figure 11;
- Figure 13:: frontal and top views (on the right-hand side) of another embodiment of a system according to the present invention, and with the access disposition (41, 42) in a closed condition;
- Figure 14:: top views of two successive instants of actuation of the embodiment according to Figure 13;
- Figure 15:: frontal and top views (on the right-hand side) of an intercalary instant of the embodiment according to Figure 13;
- Figure 16:: top views of two successive actuation instants of the embodiment according to Figure 13;
- Figure 17:: diagram of another embodiment of process according to the present invention;
- Figure 18:: diagram of continuation of the embodiment according to Figure 17;
- Figure 19:: diagram of another embodiment of process according to the present invention;
- Figure 20:: diagram of another embodiment according to the present invention;
- Figure 21:: side and frontal views (on the right-hand side) of another preferred embodiment of a system according to the present invention, with the access disposition (4) in a closed position (I);
- Figure 22:: side and frontal views (on the right-hand side) of another preferred embodiment of a system according to the present invention, with the access disposition (4) in an open position (II).

### Detailed description of the Invention

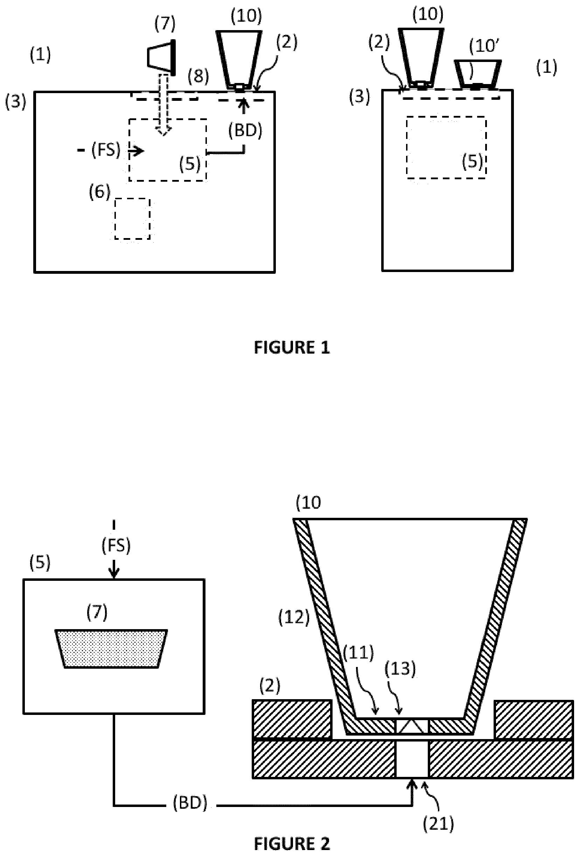

Figures 1 and 2 represent a first type of system according to the present invention.

Figure 1 represents side views (on the left-hand side of the drawing) and frontal views of an apparatus (1) for preparing beverages in a system of the type according to the present invention, including drinking recipients (10, 10') operatively placed on a recipient placement disposition (2) of said apparatus (1), whereas **Figure 2** represents a functional diagram of discharge of edible product (BD) in a system of the type of the present invention.

As represented, said apparatus (1) presents a product preparation device (5), in this case provided inside of the apparatus casing (3) of said apparatus (1) and comprising two parts at least one of which can be moved between closed and open position, so that the product preparation device (5) can collect a portion (7) of edible substance that is precursor of a beverage, for example contained inside of a capsule, and introduced through an entry passageway (8) of portions.

Moreover, said apparatus (1) can include a fluid reservoir (not represented), as well as a flow pressurization device and a fluid heating device (not represented), so that can supply a flow (FS) at a temperature comprised between 60 and 100 °C and at a pressure comprised between 1 and 20 bar, so as to interact with said edible substance. The apparatus (1) further comprises control means (6) adapted so that can control each beverage preparation cycle. The expert in the field knows these means such that one herewith abdicates from a more detailed representation or description thereof.

A beverage flow discharge (BD) is conducted from an exit of said product preparation device (5) to a recipient placement disposition (2) that includes a product discharge (21) so that the beverage discharge to the interior of the drinking recipient (10, 10') unfolds through the base portion (11) thereof.

In the case of this type of system, the drinking recipient (10, 10') presents flow regulation means (13) arranged on a base portion (11) thereof and adapted so that only enable flow entry in the drinking recipient (10, 10') if the flow pressure is greater than a previously defined flow pressure.

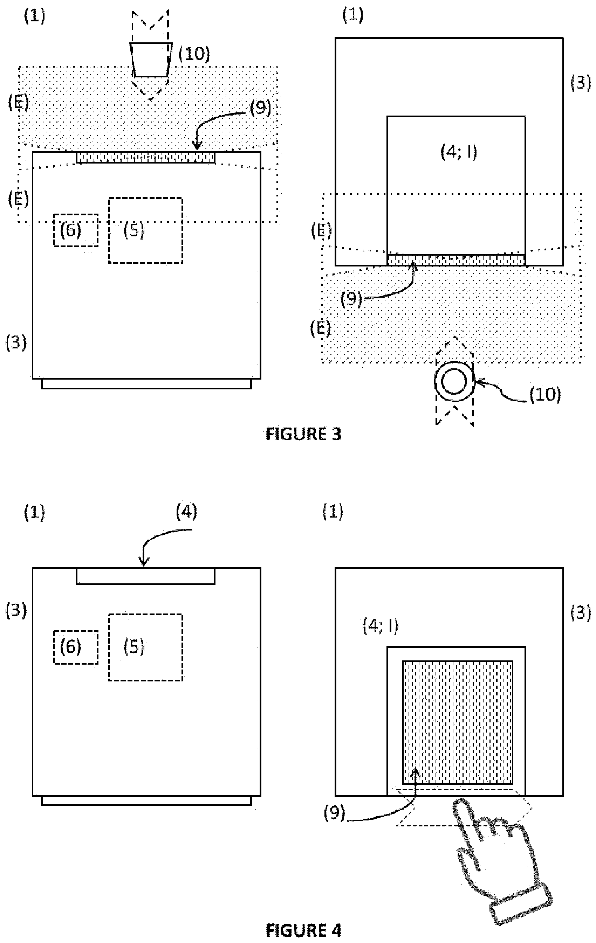

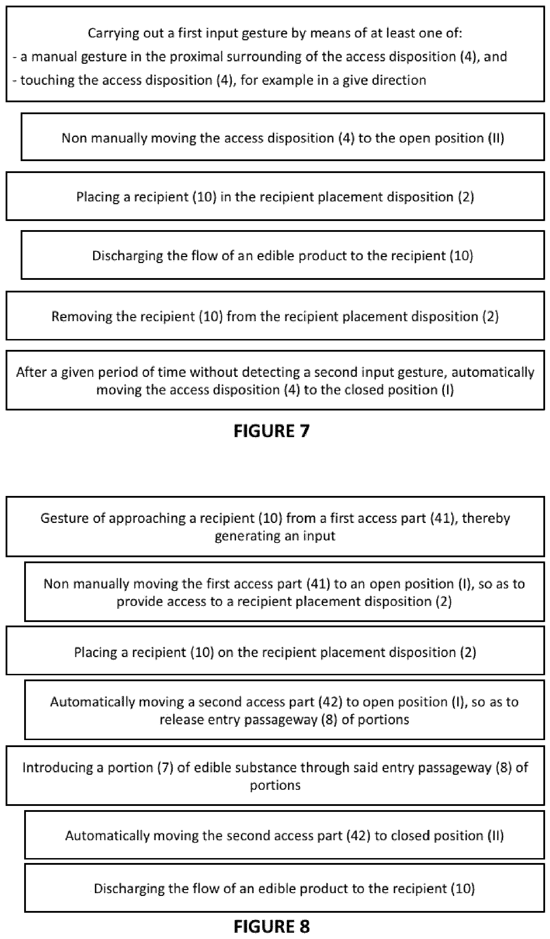

**Figures 3** to **6** represent an embodiment of a system according to the present invention, whereby **Figure 7** represents an embodiment of the associated process.

As represented, the apparatus (1) in this case presents an apparatus envelope (3) and an access disposition (4) that jointly define, at least substantially, the geometry and volume of the apparatus (1).

The access disposition (4) advantageously provides selective access to the recipient placement disposition (2) and product discharge (21), so that prevents the possibility of accumulation of dusts and other residues as a result of exposure to ambient air of a given location of use of the apparatus (1).

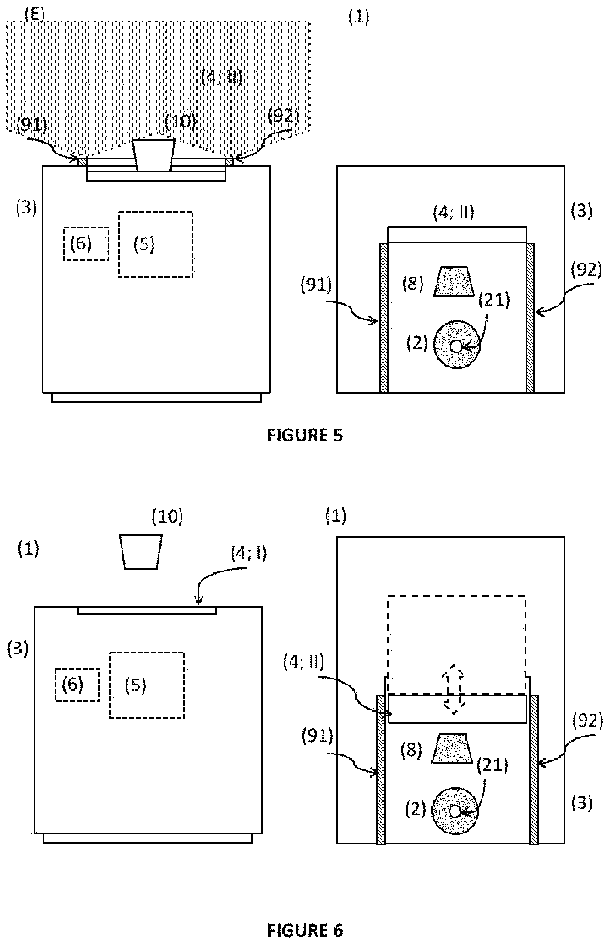

Said access disposition (4) can be actuated, for example by mechanical actuation means, in a rotation movement between a closed position - Figure 3 - and an open position (II) - Figure 5 - where provides access to the recipient placement disposition (2), product discharge (21) and entry passageway (8) of portions adapted for introduction of a portion (7) of edible substance - here not represented.

Alternatively, said access disposition (4) can be actuated in a sliding movement in a plane at least approximately parallel to the one of said recipient placement disposition (2) - vide Figure 6 that represents the access disposition (4) close to the open position (II).

It is preferred when said access disposition (4) can occupy at least an intercalary position between the closed (I) and open position (II), for example corresponding to a semi-open position where provides access to the product discharge (21), but not to the entry passageway (8) of portions.

The access disposition (4; 41, 42) can be adapted so that can provide selective access at least to the product discharge (21) and recipient placement disposition (2), whereby the access disposition (4) can completely confine the space defined by the recipient placement disposition (2) and product discharge (21) relative to the exterior of the apparatus (1) in case the access disposition (4) is at a closed position (I).

The access disposition (4; 41, 42) can be adapted so that provides selective access and confine an entry passageway (8) of portions relative to the exterior, adapted for introduction of portions (7) of edible substance and disposed on a plane and level similar or different from the plane where the recipient placement disposition (2) is disposed.

The access disposition (4; 41, 42) can be adapted, in particular operatively associated with the envelope (3) of apparatus, so that can be moved between:
- the closed position (I), where confines at least one of: the recipient placement disposition (2) including the product discharge (21) at least in case that the recipient (10, 10') is not placed thereupon, and the entry passageway (8) of portions, relative to the exterior of the apparatus (1), and
- at least one open position (II) where provides access to at least one of: the recipient placement disposition (2) for placement of the recipient (10, 10') thereupon, in particular operative placement in relation to the product discharge (21), and the entry passageway (8) of portions, for supply of a portion (7) of edible substance to the product preparation device (5).

The access disposition (4; 41, 42) can be adapted so that can provide selective access separately to the recipient placement disposition (2), including product discharge (21), and to the entry passageway (8) of portions, whereby the actuation mechanism of the first and second access parts (41, 42) is preferentially at least one of: similar and common.

The access disposition (4) can present a first and a second access parts (41, 42), whereby a first access part (41) confines and provides access at least to the recipient placement disposition (2), including product discharge (21), and a second access part (42) provides selective access to the entry passageway (8).

The first and second access parts (41, 42) can be adapted so that the opening of at least one them is only provided in can of an indication of operative opening of the other, for example the opening of the second access part (42) to the entry passageway (8) of portion is only provided in case that the recipient (10, 10') is operatively placed on the recipient placement disposition (2).

The access disposition (4; 41, 42) can be provided so that can be actuated in manual and/or non-manual manner in at least one of the movements between closed (I) and open position (II), whereby the access disposition (4; 41 42) can be preferentially retained in removable manner on the closed position (I).

The access disposition (4; 41, 42) can be adapted so that can be actuated in non-manual manner between a closed (I) and an open position (II) thereof, and vice-versa, whereby said actuation corresponds to at least one of: a rotation movement and a translation movement of at least part of the access disposition (4; 41, 42), whereby at least part of said movement is carried out in at least one of: a different plane and a plane at least approximately parallel to the plane along which extend the recipient placement disposition (2) and entry passageway (8) of portions, and whereby said movement further corresponds to at least one of: to the movement of a single access part (4), to the movement of a first access part (41) and of at least a second access part (42), preferentially in coordinated manner with each other, to the articulated movement of a plurality of access parts, for example in a diaphragm-like disposition.

The recipient placement disposition (2) can be adapted so that can be actuated in non-manual manner between a closed (I) and an open position (II), thereby enabling placement of a recipient (10) on a placement surface thereof, and vice-versa, thereby retaining the recipient (10) on the placement surface.

The access disposition (4; 41, 42) is provided with a general shape of type lid, hood, or similar, door, window, or similar, for example of planar type, and as a single piece or as a plurality of pieces.

The access disposition (4) is adapted as at least one of:
- does not extend completely above, preferentially extends completely laterally surrounded by the envelope (3) of apparatus when in a closed position (I),
- extends completely above of the envelope (3) of apparatus when in a closed position (I);
- extends in at least most part, preferentially in all the top region of the apparatus (1).

The access disposition (4; 41, 42) may not present any cavity, projection or opening.

The access disposition (4) can be provided in at least one of: top region and frontal region of the envelope (3) of apparatus.

The access disposition (4; 41, 42) can be adapted so that confines at least one of the recipient placement disposition (2) and entry passageway (8) of portions relative to the exterior in the case that at least part thereof is on the closed position (I), and provides at least one of placement of the drinking recipient (10, 10') on the recipient placement disposition (2) and introduction of portion (7) of edible substance through the entry passageway (8), in the case that at least part is on an open position (II).

The apparatus (1) can be provided so that can prepare a beverage, for example an aromatic beverage, based upon portions (7) of edible substance, for example in capsules.

The apparatus (1) can present a product preparation device (5) provided in flow connection downstream of a flow pressurization device, and a respective entry passageway (8) of portions adapted for introduction of portions (7) of edible substances, supply of the portion (7) of edible substance to the product preparation device (5).

According to an inventive aspect, the apparatus (1) further presents input means (9) operatively associated with the access disposition (4) and adapted so that can apprehend a contactless input generated on the proximal surrounding of the access disposition (4), in particular a tri-dimensional input space (E) associated with said input means (9). Said contactless input can be a gesture by a free hand, or a gesture of a hand holding a recipient (10), in particular a gesture of approaching a recipient (10) towards the access disposition (4), optionally further the presence during a previously defined period of time in the proximity of the access disposition (4).

Said input means (9) can be provided as elements oriented to the exterior and extending so as to maximize the surrounding geometric space, in particular in the frontal and top region of the apparatus (1), and be arranged in visible manner, whereby it is preferred when they are provided so that they do not result visible or perceptible by a user.

Alternatively, said input can be provided by means of a hand touch gesture without exerting pressure on the access disposition (4), including a touch in a single point, a downwards pressure touch, a pushing and/or dragging touch in a given direction.

Said input means (9) can in this case be adapted so for haptic apprehension - see Figure 4 -, so that all said hand touch gestures can preferentially be gestures of short duration and reduced intensity. Alternatively, said input means (9) can be actuated to measure a force - see Figures 5 and 6 - so that can apprehend the force being exerted.

The interaction of a user with the apparatus (1) can thus include providing an actuation input of the access disposition (4) by means of at least one of: a hand gesture in the proximal surroundings, and a touch on said access disposition (4), so that there is triggered the actuation thereof from the closed position (I).

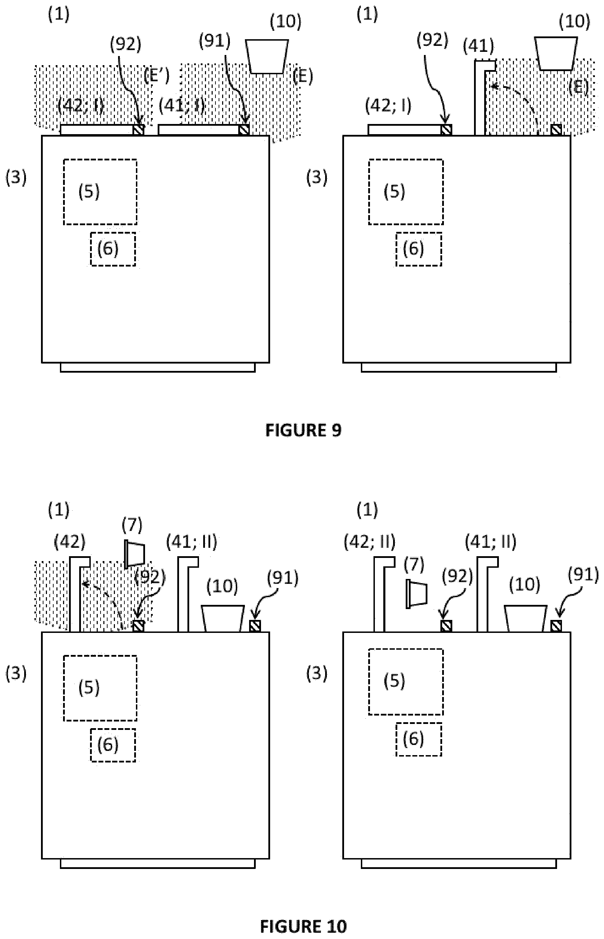

**Figure 8** represents a process according to the present invention, whereas **Figures 9** and **10** represent a second embodiment of an associated system.

The access disposition (4) in this case comprises two access parts (41, 42) that can be actuated separately, thereby providing discriminated access to the recipient placement disposition (2) and product discharge (21) in the case of a first access part (41), and to the entry passageway (8) of portions in the case of a second access part (42).

It is preferred when only the actuation of one of said access parts (41, 42) requires an input gesture, whereby the actuation of the second requires the verification of a previously defined condition associated with the first access part (41).

The user can approach a recipient (10) of the first access part (41) so that generates an input apprehended by the input means (9) that triggers the actuation of the first access part to an open position, so as to provide access to a recipient placement disposition (2).

It is preferred when the recipient (10) is provided with means, for example of the magnetic type, adapted so that can generate a contactless interaction, in a proximity surrounding of the input means (9).

The user then places the recipient (10) on the recipient placement disposition (2), whereby a apprehension of the presence of the recipient (10) thereon automatically triggers the actuation of a second access part (42) so as to release the entry passageway (8) of portions. The apprehension of the entry of portion (7) of edible substance through the entry passageway (8) of portion and/or of its presence in a product preparation device (5), automatically triggers the reverse closing movement of said second access part (42). Moreover, the control means (6) can be adapted so that, once concluded the closing movement of the second access part (42), the process of preparation and discharge of flow of edible product can be started automatically.

It is herewith provided an advantageous interaction with the apparatus (1) that requires the minimum of input gestures and operations by the user.

In particular, the user does not need to push any button, nor to actuate any lever.

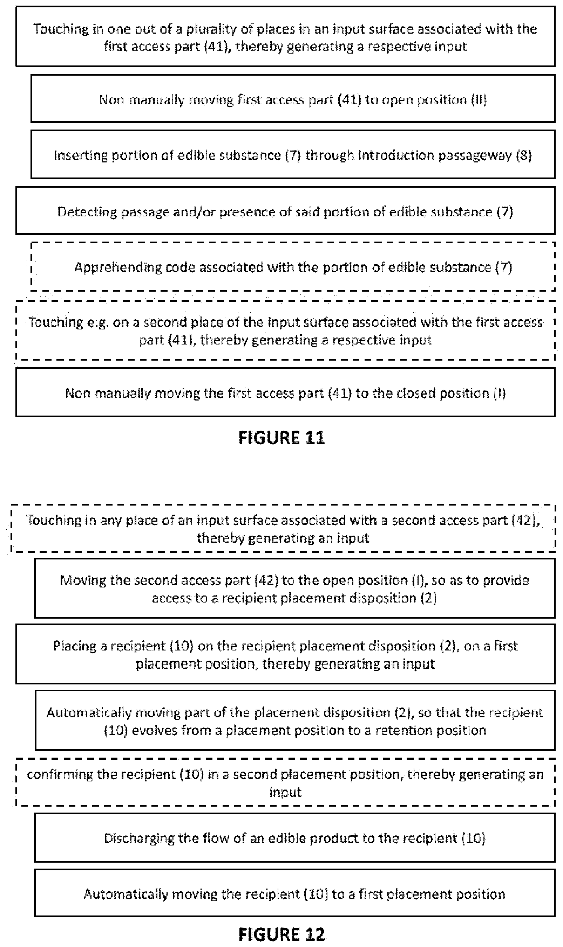

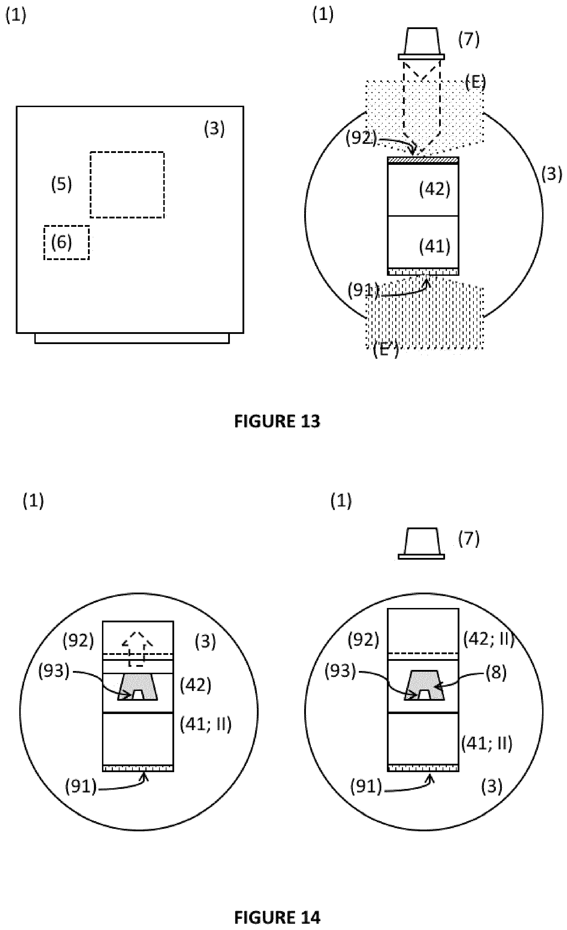

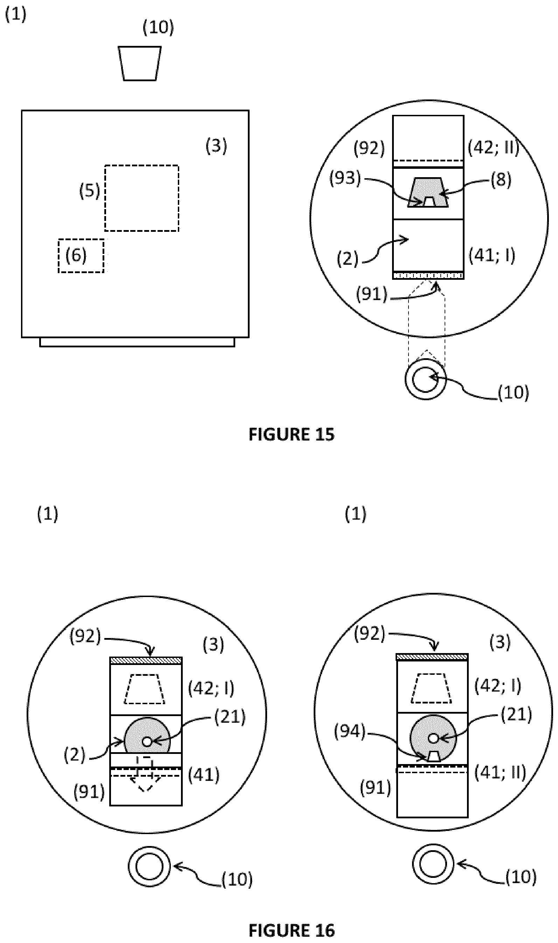

**Figures 11** and **12**, **Figures 13** to **16** and Figures **17** and **18**, represent other alternative embodiments of systems and processes according to the present invention.

First input means (91) can be provided associated with a first access part (41), second input means (92) can be associated with a second access part (42). Said input means (91, 92) can be adapted, for example as optical, magnetic or infrared detection devices, to remotely apprehend at least one of: a gesture and an object, for example a portion (7) of edible substance and/ or a recipient (10, 10'), when in a proximal surrounding that includes at least the special region that extends along the vertical projection of the top region, preferentially also the projection of the frontal region of the apparatus (1).

Moreover, there are further provided third input means (93) adapted so as to apprehend the interaction of a portion (7) of edible substance with at least one of: entry passageway (8) of portions and product preparation device (5), and fourth input means (94) adapted so that can apprehend the placement of a recipient (10).

The user can carry out an input gesture by means of manual touch in a first access part (41) that extends over an entry passageway (8) of portions.

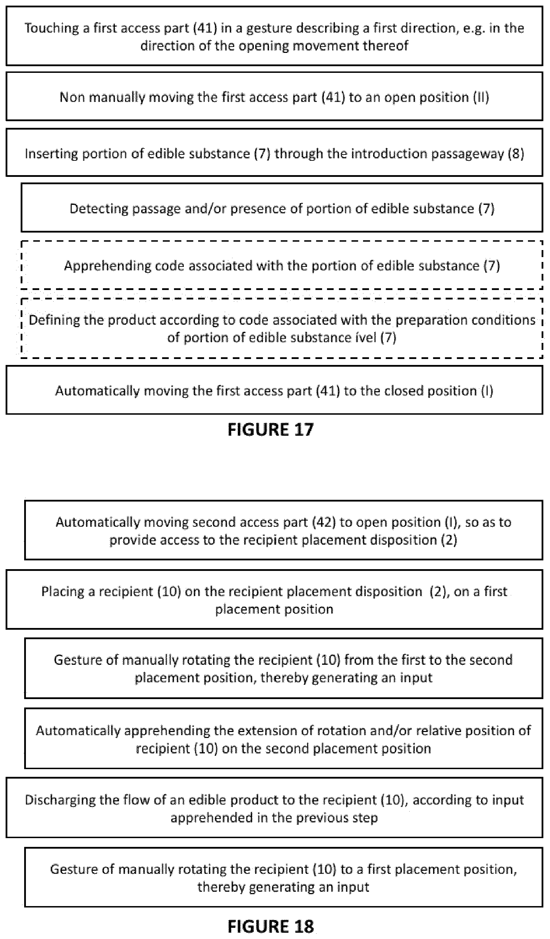

This manual touch can be only pinpoint - Figure 11 - or can describe an actuation direction - Figure 17 - thereby reinforcing the operation reliability in view of the possibility of casual touches on the input surface.

The touch is apprehended by input means (9) and the movement is triggered of the first access part (41) to an open position (II). The user can now introduce a portion (7) of edible substance. The closing movement of the first access part (41) is automatically triggered by the apprehension of the passage and/or presence of a portion (7) of edible substance. Optionally, there is further automatically triggered the data apprehension from a code associated with said portion (7) of edible substance.

The conclusion of the closing movement of said first access part (41) can automatically trigger the opening movement of the second access part (42), so as to enable placing a recipient (10) in the recipient placement disposition (2).

The detection of the recipient (10) can trigger the movement of an engagement part of said recipient placement disposition (2), in particular from a first position to a position of retention of said recipient (10). The control means (6) can now trigger the start of the process of preparation and discharge of edible product to the recipient (10). After conclusion thereof, there can be automatically triggered the movement of the engagement part of the recipient placement disposition (2), from the position of retention to a position of releasing of said recipient (10).

After a previously defined period of time without being detected any input gesture associated with at least one of said access parts (41, 42), there can be automatically triggered the closing movement of said second access part (42).

The counting of this period of time can be discontinued in the case of an input gesture, such as for example the approaching of a portion of edible substance from the first access part (41), or the placement of a recipient (10) on the recipient placement disposition (2).

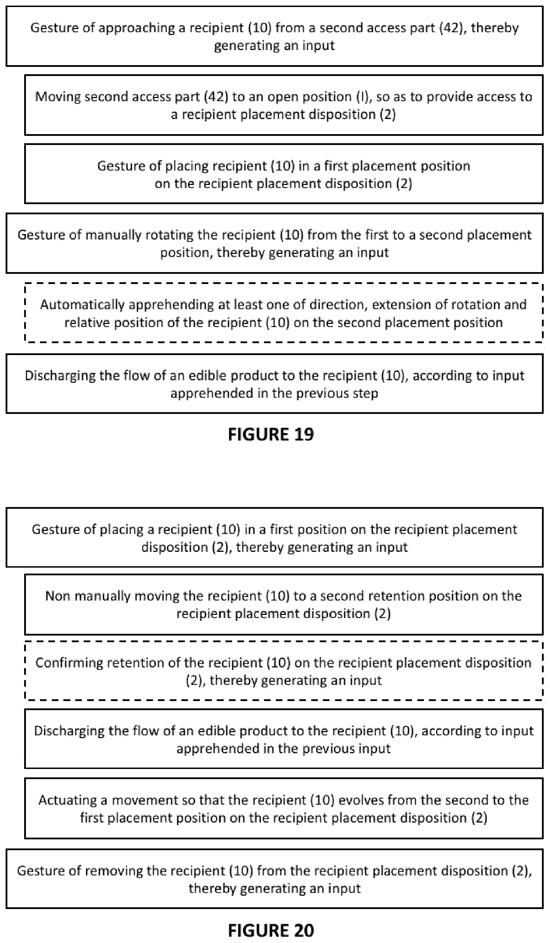

**Figures 19** and **20** represent other embodiments of the process according to the present invention, whereby it is not necessary that a user touches in any actuation means of the apparatus (1), whereby the usual use gestures provide the inputs for the preparation and discharge of edible product.

The gesture of approaching a recipient (10) from a second access part (42) can be apprehended by respective input means (92) and thereby generating an input for the actuation of automatic opening of said second access part (42). The gesture of placing the recipient in the recipient placement disposition (2), preferentially including a particular gesture, such as for example of rotation of the recipient (10), can also generate input for starting the circulation of flow for preparation of edible product.

In a preferred embodiment, the recipient (10) can be rotated between a first and a second placement position, whereby at least one of rotation direction and rotation extension can generate a respective input.

As represented in Figure 20, the apparatus (1) can include input means (9) adapted so that can detect the placement of a recipient (10), preferentially also detect the type of recipient (10, 10'), in a first position of placement thereof in the recipient placement disposition (2), and thereby automatically actuate a movement so that the recipient (10) evolves into a retention position.

The input means (9) associated with the recipient placement disposition (2) can further apprehend at least one of: data associated with said recipient (10, 10'), for example in the form of a code, and discharging the edible product according to the thereby apprehended input.

The steps can be repeated in reverse manner, whereby the whole process can unfold in automatic manner after the initial placement of a recipient (10) and until a detection of removal thereof from said recipient placement disposition (2).

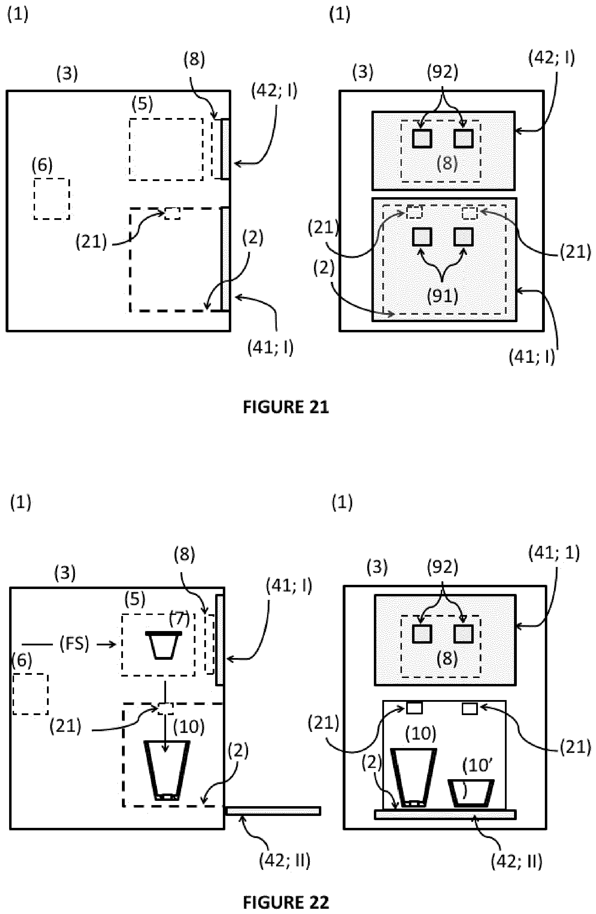

**Figures 21** and **22** represent a second type of system according to the present invention.

The apparatus (1) in this case presents an access disposition (4; 41, 42) that can be moved between closed (I) and open position (II), and respective recipient placement disposition (2) and entry passageway (8) of portions, provided on a frontal part of the apparatus (1). Alternatively, said access disposition (4; 41, 42) could present only said first and second access parts (41, 42).

Moreover, in this case the product discharge (21) is disposed above a location where a recipient (10, 10') can be operatively placed so that can collect the edible product.

It is preferred when the access disposition (4), in case of being in a closed position (II) as represented in Figure 21, at least approximately configures a regular geometry together with the envelope (3) of apparatus, for example a cube, and thereby providing an envelope devoid of projections or cavities.

## Claims

1. System for preparing edible products, for example beverages, based upon the circulation of a fluid through a portion (7) of edible substance, and comprising an apparatus (1) that presents:
- a recipient placement disposition (2) adapted so that provides operative placement of at least one type of drinking recipient (10, 10') so that can collect edible product from a product discharge (21), in particular a product discharge (21) provided so that the edible product can be discharge along a direction opposite to the gravity force,
- an envelope (3) of the apparatus,
- control means (6) adapted so that can control at least the fluid circulation on the apparatus (1),
- preferentially further presenting portion supply means, such as for example an entry passageway (8) of portion, adapted so that can supply a portion (7) of edible substance to a product preparation device (5),
- input means (9; 91, 92, 93, 94) adapted so that can apprehend an input external to the apparatus (1) and provided in operative connection with the control means (6),
**characterized**
**in that** the apparatus (1) presents an access disposition (4; 41, 42) adapted so that can be moved and thereby provide access to at least one of: entry passageway (8) and product discharge (21), and
**in that** the apparatus (1) is adapted so that can carry out at least the following operations:
- actuating at least part of said access disposition (4; 41, 42), preferentially also the recipient placement disposition (2),
- initiating the supply of a portion of edible substance to a product preparation device (5) by the portion supply means, such as for example the entry passageway (8) of portions,
- initiating fluid circulation including through the portion (7) of edible substance, and discharge to the recipient (10, 10'),
whereby at least one of said operations can be carried out based upon the apprehension of an input gesture, including at least one of:
- a hand gesture in the proximal surrounding of the apparatus (1) without touching thereupon, and
- a touch gesture on a portion of the exterior surface of the apparatus (1).

2. System according to claim 1, **characterized**
**in that** the apparatus (1) is adapted so that at least part of said access disposition (4; 41, 42), and preferentially further at least one of: the recipient placement disposition (2) and control means (6), can be actuated by at least one of:
- up to two different types of free hand input gesture without touching the apparatus (1),
- up to three types of input gesture at least in contact proximity by an electrically conducting interacting object, without exerting pressure force beyond the weight of the interacting object, for example of haptic type, with a respective input surface of the apparatus (1),
- up to four types of input gesture with contact and detection of at least one of: presence and relative position of the interacting object, with relation to a respective input surface of the apparatus (1).

3. System according to claims 1 or 2, **characterized**
**in that** the input means (9; 91, 92, 93, 94) are adapted so that can apprehend at least one of, preferentially at least two types of input gestures, including:
- in remote manner, for example of the type image capture or infrared interaction, magnetic interaction, in particular within an input space (E) associated with said access disposition (4; 41, 42), for example extending in the orthogonal projection thereof, at least in at least one of the top and frontal regions of the apparatus (1),
- in haptic manner, for example of the capacitive type, so as to generate a variation of electrical field, in particular in at least one point of an input surface presenting a plurality of adjacent possible touch points, preferentially a surface associated with said access disposition (4; 41, 42) .

4. System according to claims 1 to 3, **characterized**
**in that** the input means (9; 91, 92) are adapted so that can discriminate at least one of:
- at least two different types of contactless input gestures carried out by a hand in the proximal surrounding, in particular of a respective input space (E, E'), including at least one type of gesture from the list that includes gestures along a single direction, along at least a first and a second direction, in a single plane and at least in a first and second planes, with a first and a second configuration of the spatial path;
- at least two different types of touch input gestures carried out by at least one finger of a hand, including at least one type of touch from the list that includes pinpoint touch, sliding touch, dragging touch, preferentially upon the exterior surface of the access disposition (4; 41, 42).

5. System according to any of claims 1 to 4, **characterized**
**in that** the input means (9; 91, 92, 93, 94) are adapted so that can discriminate at least two positions of at least one of: an input gesture and an object on the apparatus (1), including at least one of, preferentially at least two of:
- at least one of at least two different locations of a touch gesture with a portion of the envelope (3) of apparatus, preferentially with the access disposition (4; 41, 42);
- at least one of two different directions and/or configurations described by a touch gesture on a portion of the envelope (3) of apparatus, preferentially with the access disposition (4; 41, 42);
- at least one of two different positions of a recipient (10) placed on the recipient placement disposition (2), and
- at least one of two different positions of a portion (7) of edible substance with relation to the portion supply means, such as for example an entry passageway (8) of portions.

6. System according to any of claims 1 to 5, **characterized**
**in that** the input means (9) are adapted so that can generate an input that triggers actuation of non-manual movement of the recipient placement disposition (2) in case of apprehension of at least one gesture of:
- oncoming of a recipient (10) in a proximal surrounding, preferentially at least of the access disposition (4; 41, 42), and
- placement of a recipient (10) on the recipient placement disposition (2), preferentially in a previously defined position of at least one portion of the recipient (10).

7. System according to any of claims 1 to 6, **characterized**
**in that** at least part of the input means (9; 91, 92) are associated to at least one exterior input location, preferentially to a plurality of exterior input locations of the apparatus envelope (3), and are directed in an orientation along at least part of the proximal surrounding at sight, and are adapted so that can in isolation or jointly apprehend remote interactions, in particular at least one of: presence, duration of presence, trajectory, relative distance, in at least part of the proximal surrounding, in particular in a respective input space (E, E'), preferentially including associated with at least one of the top and frontal regions of the apparatus (1), preferentially associated with the access disposition (4), or
**in that** at least part of the input means (9; 91, 92) are associated with at least one exterior input surface of the apparatus envelope (3) comprising a plurality of different adjacent locations of input apprehension by touch without pressure, whereby said input means (9; 91, 92) are preferentially provided underneath an exterior surface, for example as mutual capacitive sensors or similar, and are not provided in the form of a button or similar, and are preferentially provided so that are not visible or perceptible on the exterior of the apparatus (1).

8. System according to any of claims 1 to 7, **characterized**
**in that** the input means (9; 91, 92, 93, 94) are adapted so that can distinguish between at least one of: proximity and placement of a portion (7) of edible substance and of a recipient (10, 10') with relation to a portion of the apparatus (1), preferentially including to the access disposition (4; 41, 42), being preferentially further adapted so that can generate input relative to at least one of: a respective first initial position and a second position, and
**in that** the input means (9) are adapted so that can automatically detect at least one of:
- proximity of a recipient (10, 10') relative to the access disposition (4) and/or to the recipient placement disposition (2);
- placement of a recipient (10, 10') on the recipient placement disposition (2).

9. System according to any of claims 1 to 8, **characterized**
**in that** the input means (9) are operatively associated with at least one of:
- a recipient placement disposition (2) adapted so that can carry out a movement from an initial position (I),
- an access disposition (4; 41, 42) adapted so that can carry out a movement from a closed position (I);
- a portion of the apparatus envelope (3) in the proximity of, preferentially a portion in the same face of the apparatus (1) as at least one of: recipient placement disposition (2) and access disposition (4; 41, 42);
- control means (6) adapted so that can control operation of the apparatus (1), including based upon the apprehension of a code associated with the portions (7) of edible substance.

10. System according to any of claims 1 to 9, **characterized**
**in that** the input means (9; 91, 92) are adapted so that can apprehend an input gesture associated with at least one of: an optical interaction, for example image capture, an electromagnetic interaction, for example by infrared, a magnetic interaction, an interaction of capacitive type, preferentially by means of touch with a force not greater than the weight of the interacting object, for example a finger, occurring in at least one of: proximal surrounding, in particular input space (E), and envelope (3), in particular input surface, associated with the apparatus (1), in particular with the access disposition (4).

11. System according to any of claims 1 to 10, **characterized**
**in that** at least part of the recipient placement disposition (2) is adapted so that can be moved in non-manual manner, for example by electromechanical means, including at least one of:
- at least from the respective closed position (I) to an open position (II), preferentially also vice-versa,
- from an initial placement position (I) of recipient to a retention position (II) of recipient, and preferentially also vice-versa,
whereby at least one of said movements is triggered by and according to an input apprehended by said input means (9; 91, 92, 93, 94) .

12. System according to any of the previous claims, **characterized**
**in that** at least part of the access disposition (4; 41, 42) is adapted so can be moved non-manually, for example by electromechanical means, including at least one of:
- from the closed position (I) to an open position (II),
- from an open position (II) to the closed position (I),
whereby at least one of said movements is triggered by and according to an input apprehended by said input means (9; 91, 92) .

13. System according to any of the previous claims, **characterized**
**in that** the apparatus (1) is adapted so that at least part of the access disposition (4; 41, 42), preferentially also said recipient placement disposition (2), can further be automatically actuated based upon at least one of:
- detection of the presence of an object on the apparatus (1), for example of the recipient (10) on the recipient placement disposition (2);
- counting of a previously defined period of time without apprehension of said contactless, haptic or presence detection inputs.

14. System according to any of the previous claims, **characterized**
**in that** at least one of: recipient placement disposition (2) and access disposition (4; 41, 42) presents actuation means adapted so that an input apprehended by said input means (9) only triggers the actuation of opening movement from said closed position (I), and so that the actuation of closing movement from an open position (II) can be triggered by at least one of:
- previously defined operation event of the apparatus (1), such as for example detection of the presence of at least one of: portion (7) of edible substance and recipient (10, 10) in operative condition in the apparatus (1), or other indication of a respective operative condition,
- automatic count of previously defined period of time after a previously defined operation event of the apparatus (1), in particular a period of time without apprehension of other input by the input means (9).

15. Process for preparing edible products, for example a beverage, including a cycle of preparation of edible product that comprises the following steps:
- supplying, manually or automatically, a portion (7) of edible substance to a product preparation device (5), and
- placing, manually or automatically, a recipient (10, 10') on the recipient placement disposition (2) so that can collect edible product from a product discharge (21);
the cycle of preparation of edible product being **characterized in that** further includes the steps:
- carrying out at least one input gesture in at least one of: part of the proximal surrounding and part of the exterior envelope of the apparatus (1);
- apprehending the input gesture by means of the input means (9; 91, 92, 93, 94);
- providing and operative input based upon the apprehended input gesture to control means (6), so that there is triggered a respective operation of the cycle of preparation of edible product by the apparatus (1);
- carrying out an of the cycle of preparation of edible product after and according to the input gesture apprehended by the input means (9),
so that the cycle of preparation of edible product does not mandatorily require a direct touch gesture or a gesture of exerting a force by the user in any part of the apparatus (1), and does not include touching an explicit or visible user interface.

16. Process according to claim 15, **characterized**
**in that** at least part of said operations of a cycle of preparation of edible product, preferentially all the steps thereof, can be automatically triggered after and according to at least one of:
- apprehension of at least one of: a characteristic of object, a spatial characteristic of handling, and an event associated with at least one of the portion (7) of edible substance and recipient (10, 10'),
- counting a period of time, for example previously defined, with or without apprehension of any characteristic, dimension or event until ending the counting of the period of time,
so that, the cycle of preparation of edible product does not require a user to mandatorily carry out more than two, preferentially more than one input gesture associated with the apparatus (1).

17. Process according to claims 15 or 16, **characterized**
**in that** the input gesture includes at least one of:
- proximity gesture without touching, for example by a free hand, in the proximal surrounding, in particular a tri-dimensional input space, of at least part of the envelope (3) of apparatus, preferentially of the access disposition (4; 41, 42);
- touch gesture, for example with the fingers of a hand, in particular upon an input surface, preferentially associated with at least one of: envelope (3) of apparatus and access disposition (4; 41, 42);
- gesture of approaching a recipient (10) from the proximity surrounding of the apparatus (1), preferentially at least the proximity surrounding of at least part of the access disposition (4; 41, 42);
- gesture of placing a recipient (10) on the recipient placement disposition (2);
and does not include a touch gesture upon a user interface of the button type, or similar, of the apparatus (1).

18. Process according to claims 15 to 17, **characterized**
**in that** the remote gesture in the proximity surrounding includes at least one of:
- gesture along at least one of: a single direction, and a single plane;
- continuous gesture along at least one of: at least a first and a second direction, and at least a first and a second plane,
and
**in that** the touch gesture upon at least part of the access disposition (4; 41, 42), includes at least one of:
- at least one of: a pinpoint touch and a succession of pinpoint touches, upon any location amongst a plurality of locations, and
- continuous touch upon a plurality of adjacent points, thereby describing at least one of a direction and a configuration, and
**in that** the touch is exerted in at least one of: in a direction similar to the direction of required movement, in a direction different from the direction of required movement.

19. Process according to claims 15 to 18, **characterized**
**in that** the input gesture triggers at least one of the following steps:
- transition of the operative condition of the apparatus (1) from a "standby" condition to a readiness condition;
- automatic verification of the readiness of availability of the fluid for preparation of edible product and operative condition of operative devices of the apparatus (1);
- opening movement of at least part of the access disposition (4; 41, 42), thereby providing access to at least one of the recipient placement disposition (2) and entry passageway (8) of portions;
- opening movement of the product preparation device (5);
preferentially at least two of the aforementioned steps, sequentially in automatic manner.

20. Process according to claims 15 to 19, **characterized**
**in that** the process further includes at least one of, preferentially at least a plurality, of the following steps:
- placing the recipient (10, 10') on the recipient placement disposition (2);
- detecting the presence of the recipient (10, 10') on the recipient placement disposition (2);
- apprehension of a characteristic associated with the recipient (10, 10') including at least one of: characteristic dimension and code-like indicia;
- retention movement so as to retain the recipient (10) on the recipient placement disposition (2);
- handling of the recipient (10, 10') so as to evolve, for example by means of a rotation movement, from a first to a second placement position on the recipient placement disposition (2);
- confirmation that the recipient (10) is correctly retained in the recipient placement disposition (2);
- detection of supply of portion (7) of edible substance to the product preparation device (5) in at least one of: through the entry passageway (8) of portion, directly upstream and downstream of the product preparation device (5) ;
- detection of presence of portion (7) of edible substance in at least one of: in the proximity of the entry passageway (8) of portion and inside of the product preparation device (5) ;
- apprehension of data associated with the portion (7) of edible substance and supply thereof to control means;
whereby at least one of the aforementioned steps is automatically followed by at least one of:
- automatic selection of preparation parameters of edible product, based upon apprehended data;
- closing movement of at least part of the access disposition (4; 41, 42);
- start of the fluid circulation for preparation of an edible product and discharge thereof to the recipient (10, 10').

21. Process according to claims 15 to 20, **characterized**
**in that** the opening movement of the access disposition (42) associated with the entry passageway (8) of portion is carried out after at least one of the following steps:
- detection of the presence of the recipient (10) on the recipient placement disposition (2);
- confirmation that the recipient (10) is retained on the recipient placement disposition (2).

22. Process according to claims 15 to 21, **characterized**
**in that** the inputs upon each of the parts (41, 42) of the access disposition (4) triggers actions, including opening movements, driven for example by electromechanical means, associated to the respective access part (41, 42), autonomously from the other access part (41, 42).
